# EUROPEAN PATENT APPLICATION

(11) **EP 3 890 210 A1**
(43) Date of publication of application: **06.10.2021**
(21) Application number: 20166660.9
(22) Date of filing: 30.03.2020
(51) Int. Cl.: H04B 10/11, H04B 10/116

(54) **AN OPTICAL WIRELESS COMMUNICATION SYSTEM AND METHOD**

(71) Applicant: Signify Holding B.V., 5656 AE Eindhoven (NL)
(72) Inventor: The designation of the inventor has not yet been filed
(74) Representative: Verweij, Petronella Daniëlle

(57) **Abstract**

An Optical Wireless Communication system for transferring data between a transmitting unit and a receiving unit. The transmitting unit comprise a laser light source and first and second optical gratings with non-parallel lines for providing beam steering of the output of the laser light source in dependence on the laser wavelength. The output can thus be scanned in two dimensions. The receiving unit has a light detector for detecting the received laser light during the 2D scan. It reports based on a detected signal strength such that a best 2D scan position may be selected corresponding to alignment of the transmitting unit and the receiving unit. This system thus uses the communications laser and detected to implement a point to point alignment.

## Description

### FIELD OF THE INVENTION

This invention relates to optical wireless communication systems.

### BACKGROUND OF THE INVENTION

LiFi (Light Fidelity) is a new type of Optical Wireless Communication (OWC), which also includes Visible Light Communication (VLC). LiFi, OWC and VLC use light as a media of communication, for replacing cable wire (wireline) communication.

Light based communication offers the ability for high data rate communication, for example up to 14 Gbit/s, for devices having a line of sight between them. This for example applies to a set of communicating devices within an office environment.

Known Lifi products rely on a grid of optical access points mounted in the ceiling. The beams of these access points are wide enough (and thereby have a large field of view and/or coverage area) to create an overlap with the neighboring access points at the level of the desks beneath. The receiving devices in such a systems are typically located at the desks.

For ease of installation, the grid of access points is for example aligned with the luminaire grid in the ceiling. Each access point in such an installation must reach (illuminate in case of visible light) several square meters and hence illuminates a significant conical area.

To communicate with the access points, a dongle is connected to an end user device such as a laptops or tablets. These dongles also emit a similar broad beam to be sure that at least one access point will receive the signal from the dongle. The beams of the access points and the dongles are fixed in direction, so no adjustment of the beam direction is required.

There are limitations to these systems. Users within the same cone of light from an access point will have to share the bandwidth. Furthermore, users in the overlap area between independent illumination cones from different access points may cause interference between the access points.

In future systems, higher data rates will be required. These can be achieved by avoiding interference, by avoiding sharing data bandwidth with other users (by means of point to point connections) and by increasing the data rate of the optical channel. This latter requirement needs a higher signal to noise ratio at the detector.

For improved signal to noise ratio, narrow beams have been proposed that only illuminate a small area but these need to be carefully aimed towards the receiving counterparts.

Such point to point free space optical data communication systems have already been implemented in data centers and for data connections between buildings. In these cases, the beams are adjusted either manually or by a servo using Galvano mirrors or motors.

A passive beam aiming system has been proposed based on a wavelength tunable laser and two gratings with a different pitch, depth and orientation such that the when the wavelength of the beam is changed, the beam angles change with a change of wavelength according to a raster scan pattern. Thus, alignment between a transmitter and a receiver can be achieved by selecting a suitable wavelength, since this imparts a particular output direction of the laser light from the transmitter.

One of the challenges in these systems is to aim the beam in the right direction. First the counterpart must be found, then it must be followed when it moves or changes orientation. One of the proposed methods is to use radio communication between the dongle (e.g. laptop) and the access point, for example as described in US 9 246 589.

The problem with using RF for locking and tracking is that important benefits of LiFi are lost. The RF spectrum is overcrowded, and the benefit of LiFi, that eavesdropping from an adjacent office or room is not practical, is lost.

There is therefore a need for an improved point-to-point optical wireless communications system.

### SUMMARY OF THE INVENTION

The invention is defined by the claims.

According to examples in accordance with an aspect of the invention, there is provided an Optical Wireless Communication, OWC, system for transferring data between a transmitting unit and a receiving unit as an optical signal which is propagated over free space,
wherein the transmitting unit comprises:
a laser light source;
first and second optical gratings having non-parallel lines for providing beam steering of the output of the laser light source in dependence on the laser wavelength, thereby enabling the output to be scanned in two dimensions; and
a controller for controlling the laser wavelength thereby to implement a two-dimensional, 2D, scan,
wherein the receiving unit comprises:
a light detector for detecting the received laser light during the 2D scan; and
a reporting unit for reporting based on a detected signal strength such that a best 2D scan position may be selected corresponding to alignment of the transmitting unit and the receiving unit.

This system makes use of the steerable laser light source beam which will itself be used for communication between the transmitting unit and the receiving unit in a scan mode. The beam is tracked at the receiving unit and thereby used to provide alignment information.

The beam tracking is achieved by controlling the laser wavelength, since at different wavelengths, the optical gratings (i.e. diffraction gratings) provide different amounts of beam deflection. By having beam deflections in non-parallel directions from the two optical gratings, the scanning over a 2D area is achieved. In other words, as the wavelength is changed, the deflection (e.g. reflection) angles of the laser light changes so that the direction in space through which the laser light is directed is altered. As the wavelength is adjusted, the direction in space, and hence the position to which the laser light is directed, follows a path. The path is continuous while the wavelength remains within the free spectral range of the two gratings. However, when the wavelength adjustment exceeds the free spectral range of one of the gratings, there is a jump back from a maximum deflection angle for that grating back to the minimum deflection angle.

In this way, there is an angular scan range, giving steering coverage for example of the order of 10 degrees in two non-parallel directions. The angular range is for example in the range 5 degrees to 20 degrees.

The scanning thus follows a pattern of consecutive scan lines (each scan line is a set of positions in a plane remote from the transmitter unit to which the laser light is directed). This alignment information may be for initially finding an approximate position of the receiving unit (within the scan area), for example it may involve scanning the laser wavelength over a large (full) wavelength range. The laser spot will then follow all scan lines.

Alternatively, or additionally, the controller is for example adapted to implement a 2D scan as a sequence of scan positions (fewer than for a full scan) along a line and to step between successive adjacent spaced lines (fewer than for a full scan) resulting from the free spectral range of the first grating. This is the result of an increasing or decreasing wavelength for the laser light source in a sequence of steps. This limits the number of measurements needed. It may for example be used for accurate position determination, for example as part of a tracking procedure, for example after a more general alignment procedure has been followed. There may be between 2 and 5 (e.g. 2) scan positions along between 2 and 5 (e.g. 3) scan lines.

Thus, the position may be determined with higher accuracy than the individual scan positions (which result from discrete steps in the laser wavelength). By way of example, the 2D scan may comprise a pair of locations along each of three adjacent lines.

The position may also be tracked by modulating the scan position along a single scan line. A change in signal amplitude then indicates a relative movement between the transmitting unit and the receiving unit. The new position may be determined as mentioned above, by performing a scan which steps between a set of adjacent scan lines. Continuous tracking may thus take place in orthogonal directions.

The first and second optical gratings for example have orthogonal lines for providing beam steering in orthogonal directions. This provides an effective way to scan the laser light over a 2D area.

The first grating preferably has a first free spectral range, and the second grating has a second free spectral range larger than the first free spectral range. Thus, the consecutive scan lines are traced when the change in wavelength exceeds the free spectral range of the first grating.

As part of an alternative tracking approach, the controller may be adapted to apply a time-based modulation to the laser wavelength for tracking the position along a scan line, the time modulation having a modulation frequency.

This modulation enables an accurate alignment to be determined rather than finding only a best of a set of discrete alignment positions. Thus, an initial scan may use a discrete set of wavelengths, but the modulation enables the eventual accuracy to correspond to a full (analog) wavelength sweep along that scan line.

The light detector is then for detecting frequency components of the detected signal strength, and from those frequency components to determine a best scan position along the respective line.

The system preferably comprises a system controller, wherein the reporting unit is for reporting a detected signal strength to the system controller and the system controller is for controlling the transmitting unit to transmit at a wavelength corresponding to a determined best 2D scan position. The system controller may be part of the receiving unit or it may be separate. The reporting may use an optical signal or an RF signal.

The invention also provides a transmitting unit for use in an Optical Wireless Communication, OWC, system, comprising:
a laser light source;
first and second optical gratings having non-parallel lines for providing beam steering of the output of the laser light source in dependence on the laser wavelength, thereby enabling the output to be scanned in two dimensions; and
a controller for controlling the laser wavelength thereby to implement a two dimensional scan,
wherein the controller is adapted to receive a command to operate the laser light source at a wavelength which corresponds to a determined best two dimensional scan position determined during the two dimensional scan.

This aspect relates to the transmitter side of the system defined above.

The first grating for example has a first free spectral range, and the second grating has a second free spectral range larger than the first free spectral range.

The controller is preferably adapted to implement a two dimensional scan as a sequence of scan positions along a line and to step between successive spaced lines.

The controller may be adapted to apply a time-based modulation to the laser wavelength for tracking the position along a scan line, the time modulation having a modulation frequency.

The invention also provides a receiving unit for use in an Optical Wireless Communication, OWC, system, comprising:
a light detector for detecting received laser light from a transmitter during a two dimensional scan; and
a reporting unit for reporting the detected signal strength during the two dimensional scan such that a best two dimensional scan position may be selected corresponding to alignment of the transmitting unit and the receiving unit.

This aspect relates to the receiver side of the system defined above.

The invention also provides a method for transferring data between a transmitting unit and a receiving unit as an optical signal which is propagated over free space, comprising:
at the transmitting unit:
   controlling the wavelength of a laser light source, and thereby, using first and second optical gratings, providing beam steering in dependence on the laser wavelength, such that the output from the laser light source is scanned in two dimensions; and
at a receiving unit:
   detecting the received the laser light during the two dimensional scan; and
   reporting the detected signal strength;
selecting a determined best 2D scan position corresponding to alignment of the transmitting unit and the receiving unit by selecting a corresponding best wavelength for the laser light source; and
operating the transmitting unit to communicate with the receiving unit using the best wavelength.

The method may be implemented in software.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Figure 1 shows the passive beam aiming system, with no moving parts;
Figure 2 shows the raster scan of the position of the directed laser output achieved in a remote plane;
Figure 3 shows an Optical Wireless Communication, OWC, system for transferring data between a transmitting unit and a receiving unit as an optical signal which is propagated over free space;
Figure 4 shows three adjacent scan lines;
Figure 5 shows an example of the wavelength profile to scan the spot over the positions shown in Figure 4;
Figure 6 shows an alternative wavelength profile and detection signal to find the optimum wavelength λx along a scan line; and
Figure 7 shows a method for transferring data between a transmitting unit and a receiving unit as an optical signal which is propagated over free space.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides an Optical Wireless Communication system for transferring data between a transmitting unit and a receiving unit. The transmitting unit comprises a laser light source and first and second optical gratings with non-parallel lines for providing beam steering of the output of the laser light source in dependence on the laser wavelength. The output can thus be scanned in two dimensions. The receiving unit has a light detector for detecting the received laser light during the 2D scan. It reports based on a detected signal strength such that a best 2D scan position may be selected corresponding to alignment of the transmitting unit and the receiving unit. This system thus uses the communications laser to detect and to implement a point to point alignment.

The transmitting unit may make use of visible or invisible light; the advantage of using invisible light, such as in the infrared range, is that it will be less disturbing to the users and/or to the general illumination light. However, as laser light requires the observer to be within the path of the light in order to perceive it, which would effectively block communication, visible light could potentially also be used although it may cause illumination pollution at the targeted coverage area.

Beam steering using a pair of non-parallel optical grating is known. For example, referenced is provided to Ton Koonen "Indoor Optical Wireless Systems: Technology, Trends, and Applications" JOURNAL OF LIGHTWAVE TECHNOLOGY, VOL. 36, NO. 8, pp1459-1467, APRIL 15, 2018, and C.W. Oh (2017), "Free-space transmission with passive two-dimensional beam steering for indoor optical wireless networks" Eindhoven University of Technology DOI: 10.1364/OE.24.019211.

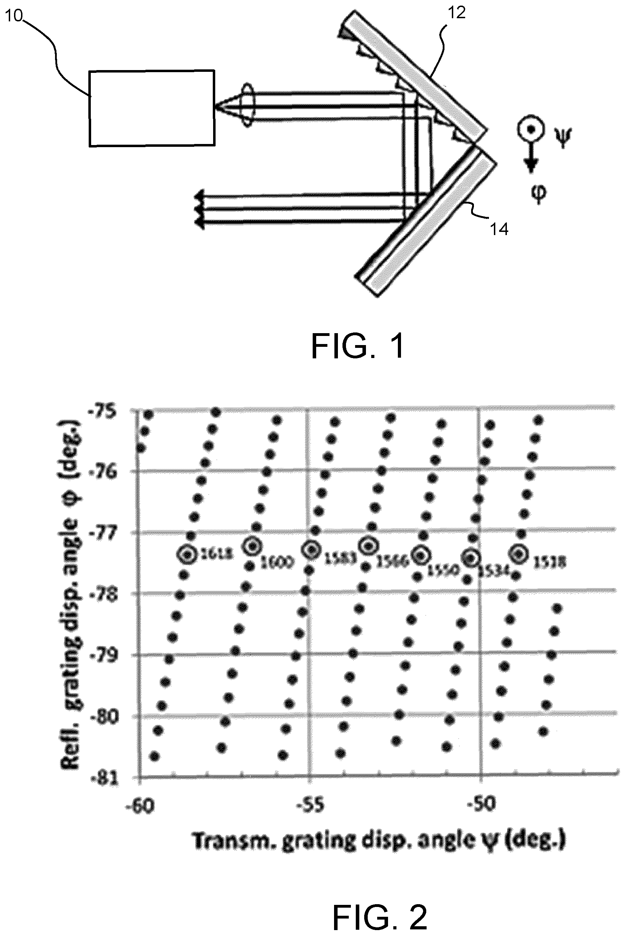

Figure 1 shows the passive beam aiming system, with no moving parts, as proposed in the two references provided above.

The beam aiming system comprises a wavelength tunable laser 10 and two reflecting gratings 12, 14. The two gratings 12, 14 have a different pitch, depth and orientation such that when the wavelength of the beam is changed the beam angles change according to a raster scan. As shown, the laser beam undergoes two reflections, one from each grating.

For this purpose, the first grating has a first free spectral range, FSR, and generates a diffraction angle ϕ. The first grating has a second free spectral range, FSR, and generates a diffraction angle ψ.

The grating lines of the two gratings are non-parallel, so that changes in wavelength cause the output direction to scan a 2D area. This 2D area may be a plane at a particular distance from the transmitter, at which the receiver is (expected to be) positioned. The grating lines are for example orthogonal.

The free spectral range is the spacing in optical frequency or wavelength between two successive reflected or transmitted optical intensity maxima or minima of the diffractive grating. The FSR may vary with temperature, process spread, aging etc. It may also vary across a wide wavelength band. These changes will in turn influence the way the output direction will scan the 2D area.

Figure 1 shows the two reflections resulting overall in a generally 180 degree reflection, but this is not the only possibility. Transmissive gratings may also be used in a slightly different configuration, in order to effectuate a similar two-dimensional steering.

Figure 2 shows the raster scan of the position of the directed laser output achieved in the coverage plane. The wavelength is scanned using discrete steps from around 1500nm to 1650nm.

The y-axis shows the displacement angle caused by the first grating, and the x-axis shows the displacement angle caused by the second grating.

It can be seen that the scanned areas covers approximately 6 degrees by 12 degrees.

The points represent the location of the directed laser beam when received at a receiving plane remote from the transmitting unit, and for a stepwise wavelength scan. The plane represented is generally perpendicular to a central or average direction of the emitted laser light.

The FSR of the first grating is smaller than the FSR of the second grating. Along each of the lines, both angles change (hence the lines are partially diagonal). When the angle for the first grating reaches an end point, corresponding to the end of the FSR, the direction jumps to a new raster line. Thus, there is a set of consecutive scan lines.

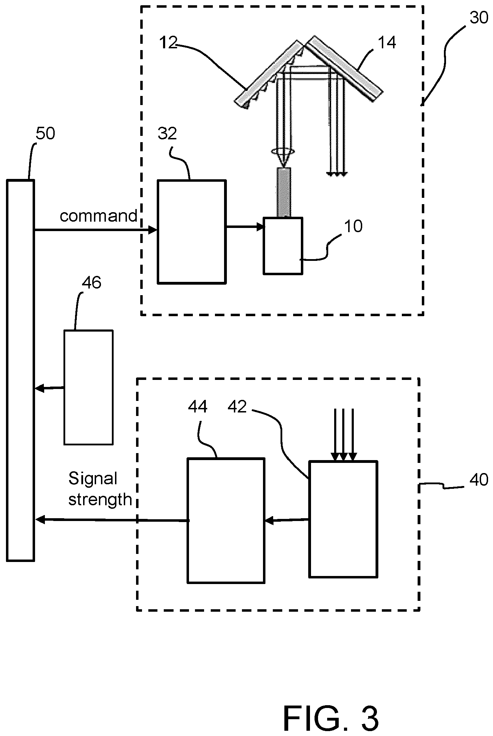

Figure 3 shows an Optical Wireless Communication, OWC, system for transferring data between a transmitting unit 30 and a receiving unit 40 as an optical signal which is propagated over free space. The transmitting unit and the receiving unit are in practice both transceiver units, but they are described as a transmitter unit and a receiving unit for ease of explanation.

As mentioned above, the way the 2D area is scanned will depend on a number of variables (temperature, ageing etc.). The movement along a given scan line is continuous, but the jump between adjacent scan lines is discontinuous and dependent on these variables. For this reason, a memory 46 is provided which stores information about the correspondence between wavelength and the paths of the 2D scan.

This information may be learned by the system in operation. For example, the memory 46 may store a look up table of wavelengths and scan lines. The memory thus enables the system to know the mapping of wavelengths to scan positions, so that it can know the characteristics of the scan profile (of Figure 2) for the particular prevailing conditions and product characteristics. A wavelength offset (corresponding to variations in FSR) is for example tracked over time and thereby tuned on a per-product basis.

Although the memory 46 is depicted here as a centralized memory, it will be clear to those skilled in the art, that in order to reduce the exchange of data, the information in memory 46 may also be locally stored in localized memory (not shown) in the transmitter unit, thereby reducing the amount of coordination/communication during operation. The memory contents of the central and/or local memory may be updated over time, periodically at predetermined times; or upon (re)calibration which may be periodic or upon request.

The transmitting unit 30 comprises the laser light source 10 and the first and second optical gratings as described above, with the non-parallel lines for providing beam steering of the output of the laser light source in dependence on the laser wavelength. This wavelength control enables the output to be scanned in two dimensions as described above. Thus, the output can be scanned across a 2D plane remote from the transmitting unit. A controller 32 is provided at the transmitting unit for controlling the laser wavelength thereby to implement the 2D, scan.

The receiving unit 40 comprises a light detector 42 for detecting the received laser light during the 2D scan. A reporting unit 44 is provided for reporting based on a detected signal strength, such that a best 2D scan position may be selected corresponding to alignment of the transmitting unit and the receiving unit.

This system makes use of the steerable laser light source beam which will itself be used for communication between the transmitting unit and the receiving unit in a scan mode. The beam is tracked at the receiving unit to report a "signal strength" and thereby provides alignment information. This is used to provide a command signal "command" to the controller 32 for operating the laser 10 at the wavelength which results in alignment with the receiving unit.

Thus, the same laser is used for the position sweep as for subsequent data delivery from the transmitting unit to the receiving unit 40.

This alignment information may be for initially finding an approximate position of the receiving unit, for example by scanning the laser wavelength over a large (e.g. full) wavelength range, for example in discrete steps. The laser spot will then follow all scan lines, and thus follow a path of all points in Figure 2.

The reporting unit measures the received intensity so that the point at which the received intensity is greatest can be reported.

The signal strength measurements are shown as provided to a system controller 50. This may be a separate unit or it may be part of the transmitting unit 30. The system controller 50 instructs the transmitting unit to transmit using the wavelength which matches the desired point to point direction from the transmitting unit to the receiving unit.

For sending the signal strength information from the receiving unit to the transmitting unit, an RF link may be used. Alternatively, an optical link may be used, by sending and receiving a broad beam instead of a point-to-point beam. The signal strength information does not require a high bandwidth signal (e.g. the 14 Gbit/s data signal); a low bandwidth signal is sufficient and hence the requirements for Signal-to-Noise ratio are quite low compared to the data communication channel. As a result, a more robust omnidirectional OWC or RF transmission signal can be used for reporting.

Although the OWC system, may be a bi-directional system, the point-to-point communication may be for the downlink only, and the uplink (the receiving unit sending data to the receiving unit) may use a broader cone-shaped light beam so as to also alleviate the complexity of, potentially mobile, receiving units. The above is suitable in particular for typical network usage, where there is a higher bandwidth requirement for the downlink than for the uplink.

If a high-speed uplink is required, the receiving unit can instead also make use of a similar scanning laser beam transmission. When the transmit unit is also equipped with a receiving unit this results in two point-to-point transceiver units, whereby the point-to-point communication is bi-directional.

The alignment routine can then be performed twice; once for each communication direction.

The large bandwidth data communication is for example implemented using amplitude modulation of the laser beam using an orthogonal frequency-division multiplexing (OFDM) scheme, as laser beams cannot produce negative signal values; preferably a unipolar OFDM scheme is used suitable for optical communication, such as ACO-OFDM, DCO-OFDM or Flip-OFDM; alternatively a DC offset may be added to render the OFDM signal unipolar at the expense of additional power consumption. Alignment setting and tracking is for example implemented using wavelength modulation / scanning of the laser. This can take place while data communication is ongoing.

During the initial alignment, the data communication may be at a reduced speed with a limited bitrate. However, for real time tracking (after initial alignment) the full bitrate communication may continue.

In this way, for a bidirectional alignment system there can be an initial alignment phase where the access point transceiver and the dongle transceiver are scanning the space in two dimensions, reporting the signal strengths to one another. Once a link is established and data communication is ongoing, both transceivers scan their wavelength in order to continuously, or periodically track their counterpart.

The system thus allows bidirectional data communication and tracking.

For example, the transmitting unit may initially perform a full frequency scan. After this full frequency scan, the receiving unit sends the reporting information back to the transmitting unit. After a general position has been identified from this raster scan, the position may be determined with higher accuracy, for example with stepping between scan positions at a finer resolution, at a reduced set of positions along a scan line and a reduced set of adjacent scan lines.

For example, an optimum scan line and the two neighboring scan lines are identified. The memory is used for determining these scan line positions.

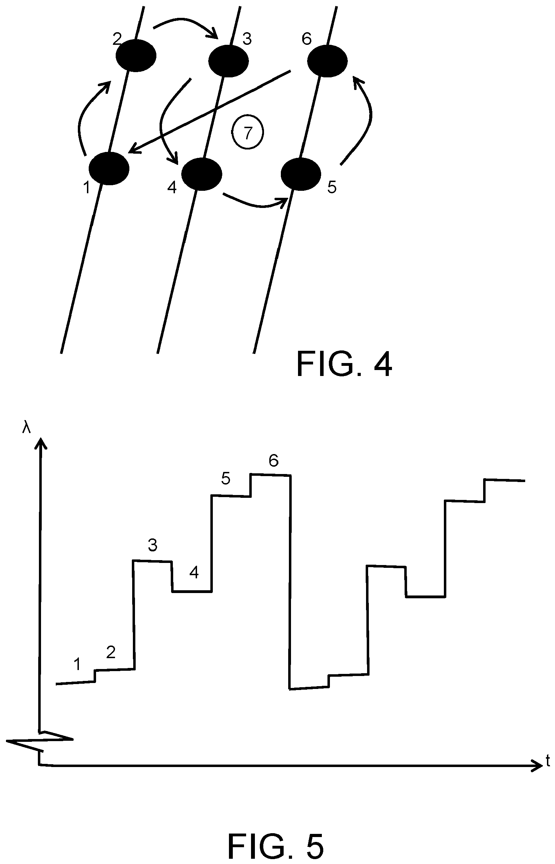

Figure 4 shows three adjacent scan lines. The dots indicate the location of the center of the illumination spot created by the transmitting during the different steps of the wavelength scan. The spot size is dimensioned such that it is possible to detect a signal at the detector at any position within the general scan area, including non-aligned with the illumination spots.

Six positions are shown in Figure 4. The spot can be moved in the generally vertical direction (i.e. along the scan lines) in an analog manner or in discrete steps, whereas the generally horizontal positions are discrete. The terms "vertical" and "horizontal" are used for convenience, and only intend to indicate movement along the scan lines, and transverse movement between adjacent scan lines, respectively.

To measure the vertical position of the beam relative to the detector, such as the point number 7, small steps are taken in wavelength and the signal strength difference is taken. By comparing the amplitude of the signal in position 1 and 2 the vertical alignment can be detected and corrected. The same can be done for spot positions 3 and 4 and 5 and 6.

The correct horizontal alignment is detected by comparing the detected signal strength in positions 2,3,6 and 1,4,5.

For example, if the highest signal is detected in the positions 1 and 2 or the positions 5 and 6, the whole sequence should be moved a full track in the horizontal direction such that the maximum signal is detected in the middle position.

If the correct alignment is found at a position in between the scan lines, there will not be a frequency corresponding to that exact position. The frequency may however be chosen to correspond to the exact position along the scan lines if the laser can be freely tuned.

The laser can preferably be tuned freely, but stepwise/discrete tuning may be used to jump between discrete positions such as shown in Figure 4. The scan lines are at discrete distances, and the area between them cannot be reached exactly. To cater for this issue, the laser spot should not be too narrow (i.e. the solid angle of the spot), but broad enough to fill the space between each of the two adjacent scan lines or each of the adjacent scan points in the event of discrete wavelength control. For example, for the set of positions shown in Figure 4, data can be received at the receiver (in position 7) for transmission to all points 1 to 6. In this way, a local scan of Figure 4 is such that it does not interrupt data reception. The solid cone of the spot should be dimensioned such that it is visible on a scan line/scan point within the coverage area of the transmitting unit. As will be clear to those skilled in the art of optics design, the spot size can be dimensioned for example by dimensioning the solid cone angle or by setting the spot-size at the target surface (taking into account the worst case distance to the target surface).

For the data transmission, the wavelength can be selected which is at the closest position along one of the scan lines to the identified detector position.

This approach may be used for accurate initial position determination and also as part of a tracking procedure, which is performed during data transmission.

Figure 5 shows an example of the wavelength profile to scan the spot over the positions in the order 1 to 6 (twice).

By combining the position detection along a scan line, as well as performing a sequence involving multiple scan lines (stepping between a set of adjacent scan lines), continuous tracking may take place in orthogonal directions.

The approach of Figures 4 and 5 basically involves interpolating between scan positions based on the signal strength detected at the discrete scan positions, in order to find an accurate position.

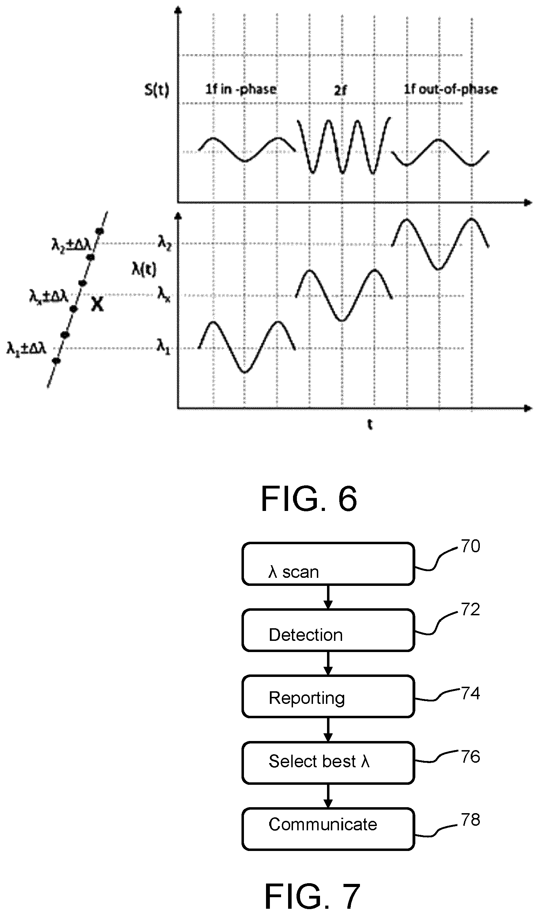

Figure 6 shows an alternative way to find the optimum wavelength λx along a scan line, e.g. along the lines 1-2, 3-4 or 5-6 of Figure 4. The top image shows the signal strength measured at three sequential time periods.

This approach makes use of a laser which allows continuous modulation of the wavelength, and thus is not limited to discrete wavelength values.

The bottom image shows the laser wavelength applied during those three time periods. The wavelength varies with the frequency f, and the time period duration is sufficient for at least a full cycle of the modulation, and preferably multiple cycles. The modulation can be seen as a time modulation Δλ(t) that is applied to the wavelength of the laser, with the time modulation having a frequency f.

In the example shown, when the laser wavelength is centered at λ1, the signal amplitude S(t) is found to vary in-phase with If. When the laser wavelength is centered at λ2, the signal amplitude S(t) is found to vary out-of-phase with If. When the laser wavelength is centered close to the optimum value λx, the signal amplitude has a strong 2f-component.

The signal amplitude is thus analyzed to detect frequency components with the frequency f and the frequency 2f. The optimum position arises where the strongest 2f component is found.

The wavelength is slowly tuned from λ1 to λ2, while modulating with amplitude Δλ at a modulation frequency f. A maximum 2f component is found in the signal when the wavelength scan is at λx. The six points shown illustrate "snapshots" during the continuous wavelength tracking process.

The modulation enables an alignment to be determined along a scan line at a most accurate positions (without reference to any discrete locations). Thus, an initial scan may use a discrete set of wavelengths, but the modulation enables the eventual accuracy to correspond to a full (analog) wavelength sweep.

Once there is a link established, there is no need for a separate reporting link, but the data communication signal strength can be used to report the signal strength.

Each dongle will have its own laser scanning system. In particular, the angle coverage is relatively small (e.g. 6 degrees by 12 degrees)

In one approach, there is one access point for each dongle so the access points no longer need to communicate with multiple receivers at the same time. The coverage of respective access points may however be increased by using suitable gratings. Multiple access points may then be seen by a dongle and vice-versa.

The invention also provides a transmitting unit for use in the system described above. The transmitting unit has a laser light source, the first and second optical gratings and the controller for controlling the laser wavelength thereby to implement a two dimensional scan. The controller receives a command to operate the laser light source at a wavelength which corresponds to a determined best two dimensional scan position determined during the two dimensional scan.

The invention also provides a receiving unit for use in the system described above. The receiving unit has a light detector for detecting received laser light from a transmitter during a two dimensional scan and a reporting unit for reporting the detected signal strength during the two dimensional scan such that a best two dimensional scan position may be selected corresponding to alignment of the transmitting unit and the receiving unit.

Figure 7 shows a method for transferring data between a transmitting unit and a receiving unit as an optical signal which is propagated over free space. The method comprises:
at the transmitting unit:
   step 70 of controlling the wavelength of a laser light source, and thereby, using first and second optical gratings, providing beam steering in dependence on the laser wavelength, such that the output from the laser light source is scanned in two dimensions.
at a receiving unit:
   step 72 of detecting the received the laser light during the two dimensional scan; and
   step 74 of reporting the detected signal strength.

In step 76, a determined best 2D scan position corresponding to alignment of the transmitting unit and the receiving unit is set by selecting a corresponding best wavelength for the laser light source.

The transmitting unit is then operated to communicate with the receiving unit using the best wavelength in step 78.

The method may be implemented in software.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

A single processor or other unit may fulfill the functions of several items recited in the claims.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to".

Any reference signs in the claims should not be construed as limiting the scope.

## Claims

1. An Optical Wireless Communication, OWC, system for transferring data between a transmitting unit (30) and a receiving unit (40) as an optical signal which is propagated over free space,
wherein the transmitting unit (30) comprises:
a laser light source (10);
first and second optical gratings (12,14) having non-parallel lines for providing beam steering of the output of the laser light source in dependence on the laser wavelength, thereby enabling the output to be scanned in two dimensions; and
a controller (32) arranged to control the laser wavelength thereby to implement a two-dimensional, 2D, scan,
wherein the receiving unit (40) comprises:
a light detector (42) arranged to detect the received laser light during the 2D scan; and
a reporting unit (44) arranged to report based on a detected signal strength such that a best 2D scan position may be selected corresponding to alignment of the transmitting unit and the receiving unit.

2. The OWC system as claimed in claim 1, wherein the first and second optical gratings have orthogonal lines arranged to provide beam steering in orthogonal directions.

3. The OWC system as claimed in claim 1 or 2, wherein the first grating (12) has a first free spectral range, and the second grating (14) has a second free spectral range larger than the first free spectral range.

4. The OWC system as claimed in claim 3, wherein the controller (32) is adapted to implement a 2D scan as a sequence of scan positions along a line and to step between successive adjacent spaced lines as a result of the free spectral range of the first grating.

5. The OWC system as claimed in claim 4, wherein the 2D scan comprises a discrete number of locations along each of a plurality of adjacent lines.

6. The OWC system as claimed in claim 3, wherein the controller is adapted to apply a time-based modulation to the laser wavelength for tracking the position along a scan line, the time modulation having a modulation frequency.

7. The OWC system as claimed in claim 6, wherein the light detector (42) is arranged to detect frequency components of the detected signal strength, and from those frequency components to determine a best scan position along the respective scan line.

8. The OWC system as claimed in any preceding claim, comprising a system controller (50), wherein the reporting unit (44) is arranged to report a detected signal strength to the system controller (50) and the system controller is arranged to control the transmitting unit (30) to transmit at a wavelength corresponding to a determined best 2D scan position.

9. A transmitting unit for use in an Optical Wireless Communication, OWC, system, comprising:
a laser light source;
first and second optical gratings having non-parallel lines arranged to provide beam steering of the output of the laser light source in dependence on the laser wavelength, thereby enabling the output to be scanned in two dimensions; and
a controller arranged to control the laser wavelength thereby to implement a two dimensional scan,
wherein the controller is adapted to receive a command to operate the laser light source at a wavelength which corresponds to a determined best two dimensional scan position determined during the two dimensional scan.

10. The transmitting unit as claimed in claim 9, wherein the first grating has a first free spectral range, and the second grating has a second free spectral range larger than the first free spectral range.

11. The transmitting unit as claimed in claim 10, wherein the controller is adapted to implement the two dimensional scan as a sequence of scan positions along a line and to step between successive spaced lines.

12. The transmitting unit as claimed in claim 11, wherein the controller is adapted to apply a time-based modulation to the laser wavelength for tracking the position along a scan line, the time modulation having a modulation frequency.

13. A receiving unit for use in an Optical Wireless Communication, OWC, system, comprising:
a light detector arranged to detect laser light from a transmitter during a two dimensional scan; and
a reporting unit arranged to report the detected signal strength during the two dimensional scan such that a best two dimensional scan position may be selected corresponding to alignment of the transmitting unit and the receiving unit.

14. A method for transferring data between a transmitting unit and a receiving unit as an optical signal which is propagated over free space, comprising:
at the transmitting unit:
controlling the wavelength of a laser light source, and thereby, using first and second optical gratings, providing beam steering in dependence on the laser wavelength, such that the output from the laser light source is scanned in two dimensions; and
at a receiving unit:
detecting the received the laser light during the two dimensional scan; and
reporting the detected signal strength;
selecting a determined best 2D scan position corresponding to alignment of the transmitting unit and the receiving unit by selecting a corresponding best wavelength for the laser light source; and
operating the transmitting unit to communicate with the receiving unit using the best wavelength.

15. A computer program comprising computer program code means which is adapted, when said program is run on a computer, to implement the method of claim 14.
